# EUROPÄISCHE PATENTANMELDUNG

(11) **EP 1 674 186 A1**
(43) Veröffentlichungstag der Anmeldung: **28.06.2006**
(21) Anmeldenummer: 05027514.8
(22) Anmeldetag: 15.12.2005
(51) Int. Cl.: B23K 1/08

(54) **Verfahren zum Wellenlöten**

(30) Priorität: 21.12.2004 DE 102004061572
(71) Anmelder: Linde Aktiengesellschaft, 65189 Wiesbaden (DE)
(72) Erfinder: Wandke, Ernst, Dr., 82538 Geretsried (DE)
(74) Vertreter: Kasseckert, Rainer

(57) **Zusammenfassung**

Die Erfindung betrifft ein Verfahren zum Wellenlöten von Werkstücken (7), wobei Mittel zum Bewegen des der Lötbehandlung zu unterziehenden Werkstückes (7) entlang einer bestimmten Bahn über mindestens eine über einem Lotreservoir (2) erzeugte Lötwelle (3, 4) vorgesehen sind, wobei sich über dem Lotreservoir (2) eine Schutzgasatmosphäre unter weitgehendem Ausschluss von Sauerstoff befindet, wobei die Bahn so verläuft, dass zumindest ein Teil des Werkstückes (7) mit der Lötwelle (3, 4) in Berührung kommt, und wobei eine Abdeckhaube (1) mit Leitblechen (5) und Rohre (6, 8) zur Zuführung des Schutzgases unterhalb des Werkstückes (7) vorgesehen sind. Zur Verbesserung der Lötqualität wird erfindungsgemäß die Gaszufuhr so eingestellt, dass in den Spalten (S1, S2) zwischen abfallender Lötwelle (3, 4) und benachbartem Leitblech (5), eine Strömungsgeschwindigkeit V_{S} zwischen 50 und 80 m/min. herrscht (Fig.).

## Beschreibung

Die Erfindung betrifft ein Verfahren zum Wellenlöten von Werkstücken nach dem Oberbegriff des Anspruchs 1. Dabei wird das der Lötbehandlung zu unterziehende Werkstück über mindestens eine über einem Lotreservoir erzeugte Lotwelle bewegt, wobei über dem Lotreservoir eine Schutzgasatmosphäre unter weitgehendem Ausschluss von Sauerstoff ausgebildet wird und zumindest ein Teil des Werkstücks mit der Lötwelle in Berührung gebracht wird.

Solche Lötverfahren sind aus der DE 195 41 445 A1 oder der DE 298 23 860 U1 bekannt. Bei diesen Verfahren ist die Lötwelle nur unterhalb des Werkstückes mit Schutzgas umspült. Im Gegensatz zu anderen Schutzgaseinbringungen oberhalb und unterhalb des Werkstückes führt das dazu, dass nur relativ wenig Schutzgas verbraucht wird. Beiden Lösungen ist gemeinsam, dass das Lötbad mehr oder weniger abgedeckt ist und durch Strömungsleitbleche versucht wird, eine möglichst laminare Parallelströmung zwischen Leitblech und abströmender Welle zu erzeugen. Werden die Abstände zwischen den Leitblechen und den abströmenden Wellen zu schmal gestaltet oder wird die zugeführte Gasmenge so gewählt, dass im Strömungsspalt zu hohe Geschwindigkeiten entstehen, so werden die von der Leiterplatte "abgewaschenen" Verunreinigungen und die entstandene Restkrätze (Lotoxide) von den zu hohen Strömungskräften - hauptsächlich Scherkräften - mitgerissen und auf der Leiterplatte als Verunreinigung, im Maschineninnenraum und im Abluftsystem oder gar auch im Produktionsraum als feines graues Pulver verteilt. Dieses Pulver ist hochgiftig, beeinträchtigt die Arbeitsatmosphäre und erhöht den Wartungsaufwand.

Im anderen Fall, wenn die Strömungsgeschwindigkeit zu klein eingestellt ist, wird die Inertgasatmosphäre unter der Abdeckung und im Wellenbereich durch Lufteinbruch geringer sein als erwünscht ist. Der angestrebte Restsauerstoffgehalt von weniger als 0,5 % kann dann nicht eingehalten werden. Die Folge davon ist, dass die Wirkung der Abdeckung damit der Inertisierung gemindert wird oder gar gegen Null geht. Es sinkt die Lötqualität und der Lotverbrauch und die Krätzeproduktion steigen an. Ebenso die erforderliche Wartungsarbeit.

Es ist daher Aufgabe der Erfindung, ein solches Lotverfahren dahingehend zu verbessern, dass die Produktionsqualität gleichmäßig hoch bleibt.

Diese Aufgabe wird erfindungsgemäß gelöst von einem Verfahren mit den Merkmalen des Anspruchs 1. Eine Ausführung der Erfindung ist Gegenstand eines Unteranspruchs.

Erfindungsgemäß können also die beschriebenen Nachteile dadurch verhindert werden, dass im Strömungsspalt zwischen der abfallenden Lötwelle und den entsprechenden Leitblechen eine bestimmte Strömungsgeschwindigkeit eingestellt wird. Die Strömungsgeschwindigkeit liegt zwischen 50 und 80 m/min., in einer bevorzugten Ausführung der Erfindung zwischen 60 und 70 m/min.. Der Gasströmung, insbesondere ihrer Geschwindigkeit, wurde bisher beim Wellenlöten noch keine besondere Aufmerksamkeit geschenkt. Es wurde überraschend gefunden, dass gerade die Gasgeschwindigkeit in den Spalten eine besondere Bedeutung für das Aufrechterhalten qualitativ hochwertiger Lötverbindungen hat, denn nur bei erfindungsgemäßer Strömungsgeschwindigkeit in diesem Bereich kommt es zur Ausbildung der ausreichend inertisierenden Atmosphäre im Lötbereich, wodurch die Oxidbildung weitestgehend verhindert und die Benetzungsbedingungen verbessert werden. Damit wird die Fehlerrate gesenkt. Insbesondere beim Einsatz bleifreier Lote - bedingt durch die höhere Löttemperatur und die damit gestiegene Affinität des Lotes zum Luftsauerstoff - gewinnt die Erfindung zusätzlich an Bedeutung.
Für den Einsatz bleifreie Lote ist es erforderlich, dass die Leitbleche aus Titanblech oder Edelstahl mit einer entsprechenden Beschichtung (z. B. Emailschicht) gefertigt werden. Ohne diese Maßnahmen beträgt die Lebensdauer der Leitbleche nur wenige Wochen bis Monate, bedingt durch eine kombinierte Beanspruchung von Korrosion und Verschleiß.

Die Erfindung bringt dem Lötmaschinenbetreiber den Vorteil der Qualitätsverbesserung, da nunmehr deutlich weniger Ausschuss produziert wird. Gleichzeitig kann eine Gaseinsparung erreicht werden, da nunmehr die zu hohe Dosierung des Gases vermieden werden kann. Einsparungen ergeben sich ebenfalls bei den Reinigungsarbeiten. Es wird ein verbesserter Arbeits- und Gesundheitsschutz erreicht, da nun weniger toxische Partikel den Produktionsbereich verlassen, die ansonsten abgesaugt oder anderweitig umständlich entfernt werden müssten, um die entsprechenden Arbeitsplatzrichtlinien einhalten zu können.

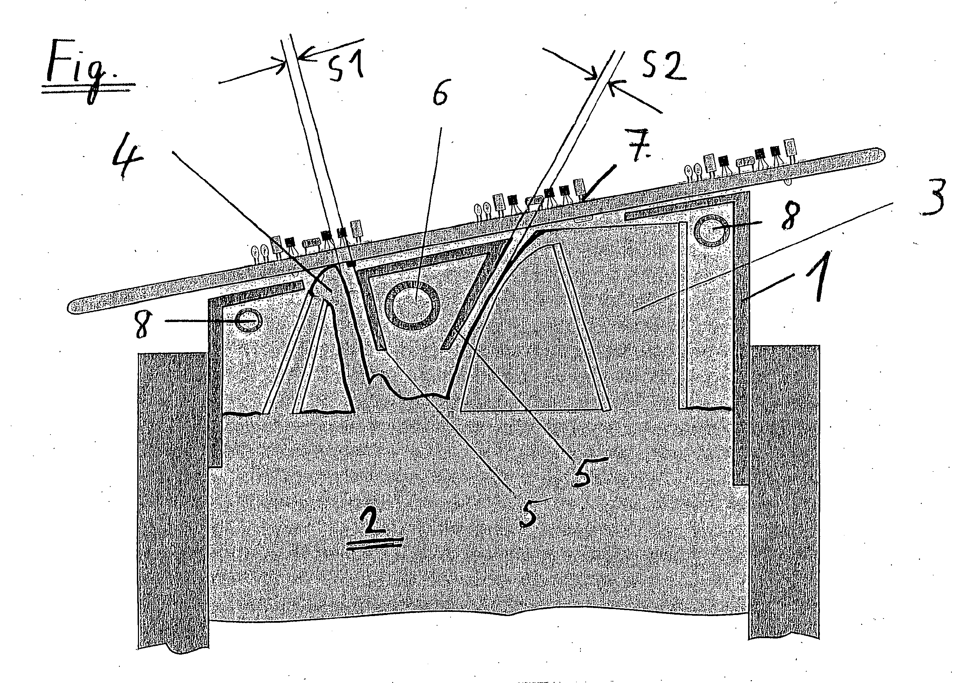

Eine Ausführung der Erfindung wird anhand einer Figur näher beschrieben. Die Figur zeigt eine Vorrichtung zum Wellenlöten von Werkstücken 7 mit einem Lotbad 2, in dem die Lotwellen 3 und 4 erzeugt werden, die mit ihrem Wellenscheitel die zu bearbeitenden Werkstücke 7 von unten her berühren. Zum Inertisieren der Atmosphäre ist die Abdeckhaube 1 vorgesehen, die Leitbleche 5 und Rohre 6, 8 enthält, durch die inertisierendes Gas, bevorzugt Stickstoff, in den Raum unterhalb des Werkstückes 7 eingeleitet wird. In der Figur sind die zwei Spalte S1 und S2 eingezeichnet, die jeweils zwischen der abfallenden Lötwelle und dem benachbarten Leitblech 5 liegen. Diese Spalte S1, S2 vergrößern oder verkleinem sich je nach Menge der aufsteigenden und abfallenden Lötwelle und je nach Menge des zugegebenen Gases. Erfindungsgemäß werden die Umwälzmenge des Lots 2 und die Gaszufuhr nun so eingestellt, dass in den Spalten S1 und S2 Strömungsgeschwindigkeiten zwischen 50 und 80 m/min herrschen. In der Ausführung der Figur 1 stellt sich eine Spaltbreite S1 = S2 = 8 mm ein, wenn das Gas erfindungsgemäß zugegeben wird. Die Wellen 3 und 4 sind in dieser Ausführung 400 mm lang. Damit ergibt sich beidseitig eine Strömungsspaltfläche von 3.200 mm². Mit einer Gasmenge von 2,5 m³/Std. für die mittlere Lanze 6 wird im Spalt eine Strömungsgeschwindigkeit von V = 65,2 m/min. herrschen und damit Strömungsverhältnisse, die dem erfindungsgemäßen Bereich entsprechen. Dadurch ergibt sich eine gute Lötqualität für die Bauteile 7, optimaler Lotverbrauch und ein geringer Wartungs- und Reinigungsaufwand.

## Patentansprüche

1. Verfahren zum Wellenlöten von Werkstücken (7), wobei Mittel zum Bewegen des der Lötbehandlung zu unterziehenden Werkstückes (7) entlang einer bestimmten Bahn über mindestens eine über einem Lotreservoir (2) erzeugte Lötwelle (3, 4) vorgesehen sind, wobei sich über dem Lotreservoir (2) eine Schutzgasatmosphäre unter weitgehendem Ausschluss von Sauerstoff befindet, wobei die Bahn so verläuft, dass zumindest ein Teil des Werkstückes (7) mit der Lötwelle (3, 4) in Berührung kommt, und wobei eine Abdeckhaube (1) mit Leitblechen (5) und Rohre (6, 8) zur Zuführung des Schutzgases unterhalb des Werkstückes (7) vorgesehen sind, **dadurch gekennzeichnet, dass** die Gaszufuhr so eingestellt wird, dass in den Spalten (S1, S2) zwischen abfallender Lötwelle (3, 4) und benachbartem Leitblech (5) eine Strömungsgeschwindigkeit V_{S} zwischen 50 und 80 m/min. herrscht.

2. Verfahren nach Anspruch 1, **dadurch gekennzeichnet, dass** eine Strömungsgeschwindigkeit zwischen 60 und 70 m/min. eingestellt wird.
